# EUROPEAN PATENT APPLICATION

(11) **EP 3 238 657 A1**
(43) Date of publication of application: **01.11.2017**
(21) Application number: 15872974.9
(22) Date of filing: 21.12.2015
(51) Int. Cl.: A61C 19/06, A61J 1/05

(54) **SYNTHETIC RESIN PACKAGE**

(30) Priority: 24.12.2014 JP 2014260051
(71) Applicant: Tokuyama Dental Corporation, Tokyo 110-0016 (JP)
(72) Inventor: OKISHIO, Kazuhiko, Tokyo 110-0016 (JP); YAMAGUCHI, Nobutoshi, Tokyo 110-0016 (JP); HIRATA, Kouichirou, Tokyo 110-0016 (JP); KISHI, Hiroto, Tokyo 110-0016 (JP)
(74) Representative: J A Kemp
(86) International application number: PCT/JP2015/085642
(87) International publication number: WO 2016/104406

(57) **Abstract**

The present invention provides a synthetic resin package (2) improved at least partially in the ease of use as compared with conventional packages, and containing at least one pouch (14) which accommodates a dental liquid (21) and which, when pressed, is unsealed at one end edge and allows the dental liquid to be flowed out through the unsealed one end edge.

In the package (2), both side edges (4a, 4b) and a bottom edge (6) are closed throughout; an applicator insertion section (10) and a pouch housing section (12) situated adj acently in a lateral direction are defined; in a top edge (8), a site (8b) corresponding to the pouch housing section (12) is closed at least partially, while a site (8a) corresponding to the applicator insertion section (10) is open; and the pouch (14) is positioned within the pouch housing section (12), with the one end edge to be unsealed facing downward.

## Description

### Technical Field

This invention relates to a synthetic resin package containing at least one pouch which accommodates a dental liquid and which, when pressed, is unsealed at one end edge and allows the dental liquid to be flowed out through the unsealed one end edge.

### Background Art

A dental liquid, such as a dental adhesive liquid or disinfectant liquid, is generally discharged from a pouch or a bag portion accommodating a small amount of the dental liquid in a sealed state, stuck to the leading end of an applicator, and applied to an affected area (i.e., lesion) of a patient. Patent Document 1 below discloses a package provided with a bag portion (compartment) accommodating a dental liquid, andapocket portion adjacent to the bag portion via a sealed portion (break zone). The pocket portion houses the leading end of an applicator. To apply the dental liquid to the affect area, the bag portion is pressed to exert pressure on the dental liquid, thereby unsealing the sealed portion. As a result, the dental liquid accommodated in the bag portion is flowed into the pocket portion, and stuck to the leading end of the applicator. Then, the leading end of the applicator is removed from the pocket portion, and applied to the affected area.

### Prior Art Documents

### Patent Documents

Patent Document 1: JP-A-11-146902

### Summary of the Invention

### Problems to be solved by the invention

However, the package disclosed in Patent Document 1 is not easy to use, and poses the following problems: (1) The flowing direction of the dental liquid when flowed into the pocket portion upon pressing of the bag portion is toward the open end of the pocket portion. Thus, the dental liquid, particularly when having a low viscosity, is liable to pass through the pocket portion and flow to the outside. (2) When the pressing of the bag portion is released, the bag portion is elastically restored to its original state. As a result, the dental liquid flowed into the pocket portion tends to be returned to the bag portion. (3) Since the package is formed from an opaque material, the flow of the dental liquid cannot be confirmed visually.

The present invention has been accomplished in the light of the above facts. Amain technical challenge to the invention is to provide a synthetic resin package improved at least partially in the ease of use as compared with the aforementioned package disclosed in Patent Document 1, and containing at least one pouch which accommodates a dental liquid and which, when pressed, is unsealed at one end edge and allows the dental liquid to be flowed out through the unsealed one end edge.

### Means for solving the problems

The present inventors diligently conducted studies. As a result, they have found that the above main technical challenge can be overcome by a package in a unique form, namely, a package in a form in which both side edges and a bottom edge thereof are closed throughout; an applicator insertion section and a pouch housing section situated adj acently in a lateral direction are defined; in a top edge thereof, a site corresponding to the pouch housing section is closed at least partially, but a site corresponding to the applicator insertion section is open; and a pouch is positioned within the pouch housing section, with one end edge of the pouch to be unsealed facing downward.

That is, according to the present invention, there is provided, as the above-mentioned synthetic resin package solving the main technical challenge, a synthetic resin package containing at least one pouch which accommodates a dental liquid and which, when pressed, is unsealed at one end edge and allows the dental liquid to be flowed out through the unsealed one end edge, wherein
both side edges and a bottom edge of the package are closed throughout, an applicator insertion section and a pouch housing section situated adjacently in a lateral direction are defined in the package and, in a top edge of the package, a site corresponding to the pouch housing section is closed at least partially, while a site corresponding to the applicator insertion section is open,
the pouch is positioned within the pouch housing section, with the one end edge facing downward, and when the pouch is pressed via the package, the one end edge of the pouch is unsealed, whereby the dental liquid is flowed out from inside the pouch through the one end edge to a lower part of the pouch housing section, and then flowed to a lower part of the applicator insertion section, and
when an applicator is inserted into the applicator insertion section through the top edge which has been opened, the dental liquid can be stuck to a leading end part of the applicator.

Preferably, the pouch is introduced into the pouch housing section, with at least a part of the other end edge portion of the pouch being interposed between predetermined sites of top edge portions of the package. Preferably, the top edge portions are partly joined together, whereby the site of the top edge corresponding to the pouch housing section is closed, and the other end edge portion of the pouch is confined between the top edge portions of the package, while the one end edge of the pouch is located upwardly away from the bottom edge of the pouch housing section. Alternatively, opposing wall surfaces of the package are joined together along the boundary between the pouch housing section and the applicator insertion section, but except for a lower end part of the package, whereby the pouch is restricted to a required position within the pouch housing section, and the one end edge of the pouch is located upwardly away from the bottom edge of the pouch housing section. It is preferred that the package be formed by shaping a belt-shaped synthetic resin film or sheet into a tubular form, joining both end edge portions of the tubular form over the entire lengths thereof, joining bottom edge portions of the tubular form over the entire lengths thereof, and joining top edge portions of the tubular form partially, and that before the top edge portions are partially joined, the pouch be introduced into the pouch housing section. At least one of the lower part of the pouch housing section and the lower part of the applicator insertion section is desirably transparent or translucent. In the top edge portion of the applicator insertion section, it is preferred that a notch extending downward from the top edge be formed in one wall surface of the applicator insertion section. In the top edge portion of the applicator insertion section, it is preferred that the other wall surface of the applicator insertion section be colored in a color different from the color of the one wall surface of the applicator insertion section. It is also preferred that at least apart of the top edge of the applicator insertion section be inclined gradually upwardly in a direction away from the pouch housing section. Advantageously, the bottom edge is closed by joining bottom edge portions of both wall surfaces of the package mutually, and a part in a mutually joined region of the bottom edge portions, which corresponds to the pouch housing section, is inclined gradually upwardly in a direction away from the applicator insertion section. Alternatively, it is advantageous that a part in the mutually joined region of the bottom edge portions, which corresponds to the applicator insertion section, be inclined gradually upwardly in a direction away from the pouch housing section. Preferably, an indication is provided at a predetermined site of pressing on at least one wall surface of the pouch housing section. In a preferred embodiment, at least two of the pouches are located within the pouch housing section, and liquids flowed out of the at least two pouches are mixed.

### Effects of the invention

In the package of the present invention, the dental liquid flowed out from the one end edge of the pouch when pressed is flowed toward the closed bottom edge of the package. Thus, the dental liquid does not flow to the outside accidentally. In the form in which the bottom edge of the pouch is located upwardly away from the bottom edge of the package, the dental liquid flowed out of the pouch when the pouch is pressed is separated from the bottom edge of the pouch. Even if the pouch is elastically restored to the original state after the pressing of the pouch is released, therefore, the dental liquid flowed out of the pouch is not returned into the pouch. In the form in which at least lower parts of the pouch housing section and the applicator insertion section are transparent or translucent, the dental liquid, which is flowed out from the pouch to the lower part of the pouch housing section and flowed into the lower part of the applicator insertion section, can be visually confirmed to be flowing.

### Brief Description of the Drawings

[Fig. 1] is a perspective view of a preferred embodiment of a package configured according to the present invention.
[Fig. 2] is a perspective view of a pouch in the package shown in Fig. 1.
[Figs. 3a, 3b] are perspective views for illustrating the mode of production of the package shown in Fig. 1.
[Fig. 4] is a transverse sectional view taken on line IV-IV in Fig. 1 when two of the pouches are housed in a pouch housing section.
[Fig. 5] is a perspective view for illustrating the mode of use of the package shown in Fig. 1.
[Fig. 6] is a perspective view of an applicator shown in Fig. 5.
[Fig. 7] is a perspective view of another preferred embodiment of the package configured according to the present invention.
[Fig. 8] is a perspective view of still another preferred embodiment of the package configured according to the present invention.
[Fig. 9] is a perspective view of a further preferred embodiment of the package configured according to the present invention.

### Mode for Carrying Out the Invention

The present invention will now be descried in further detail by reference to the accompanying drawings showing embodiments configured according to the present invention.

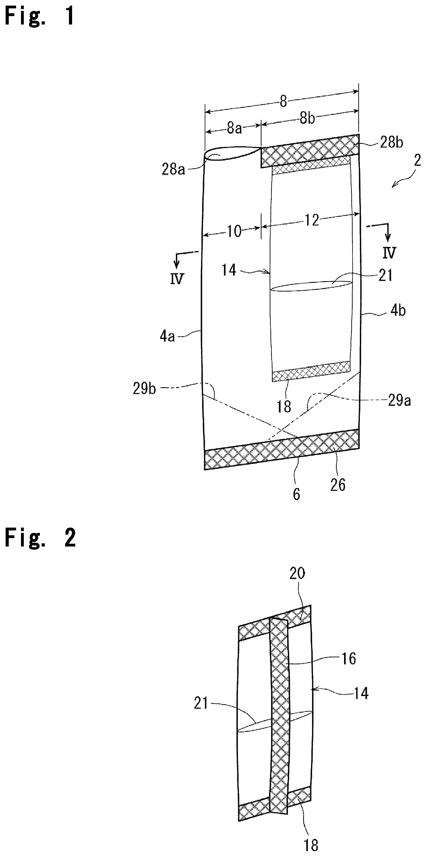

Fig. 1 shows a preferred embodiment of a synthetic resin package configured according to the present invention. A package 2 illustrated here is in the form of a vertically long rectangular thin bag as a whole, and both side edges 4a, 4b and a bottom edge 6 thereof are closed throughout.

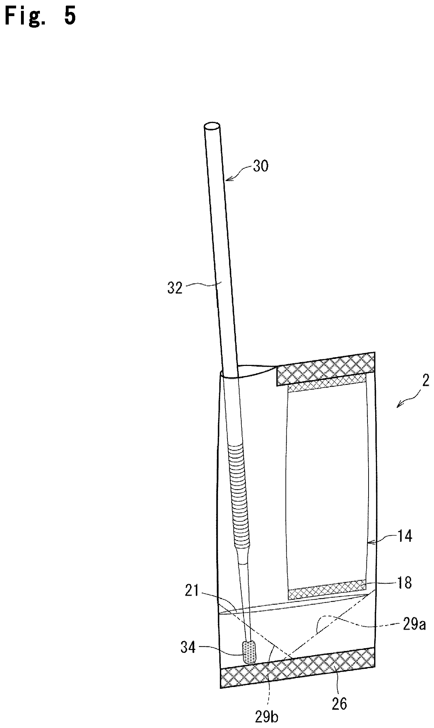

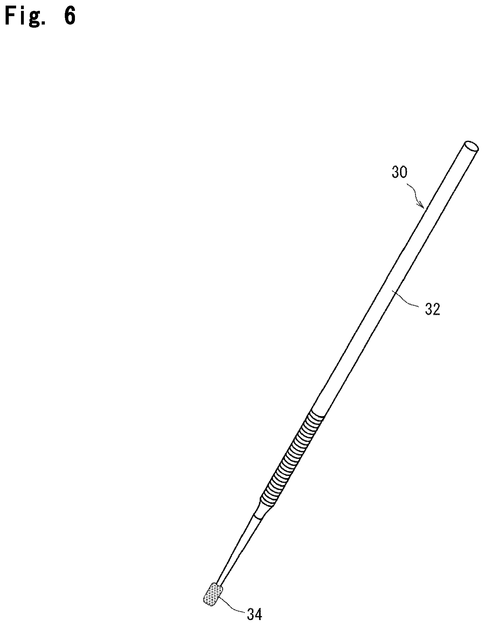

Both side edges 4a and 4b are preferably structured to avoid a situation in which a dental liquid flowing out to a lower part of a pouch housing section 12 ascends to a top edge portion of the package 2 by a capillary phenomenon. Concretely, both side edges 4a and 4b are preferably of a semicircular shape or a semielliptical nearly semicircular shape in a transverse sectional view of the package 2. Even when not in a nearly semicircular shape, both side edges 4a and 4b may have a structure in which the surfaces constituting both side edges 4a and 4b are separated by a sufficient distance so that the dental liquid does not ascend by a capillary phenomenon (in this case, the package 2 is preferably a resin product processed by injection molding, extrusion or blow molding as will be described in detail later). Owing to the above structure of both side edges 4a and 4b, the dental liquid flowing out to the lower part of the pouch housing section 12 is easy to take using a liquid holding portion 34 of an applicator 30 to be detailed later (see Figs. 5 and 6), and volatilization of the dental liquid can be suppressed.

It is important for a top edge 8 to have a part 8a open, but have a remainder 8b closed at least partly and, in the illustrated embodiment, closed over its entire length. Within the package 2, an applicator insertion section 10 and a pouch housing section 12 located adjacently in a lateral direction are defined, and the open part 8a of the top edge 8 corresponds to the applicator insertion section 10, while the closed remainder 8b of the top edge 8b corresponds to the pouch housing section 12. The package 2 may entirely be opaque, transparent or translucent, but advantageously, at least one of a lower part of the applicator insertion section 10 and a lower part of the pouch housing section 12 is transparent or translucent. Since these lower parts are transparent or translucent, the flowing-out state of the dental liquid can be confirmed. The range in which they are transparent or translucent is such that the dental liquid having flowed out can be confirmed in the lower part of the applicator insertion section 10 and the lower part of the pouch housing section 12. This range may be either the lower part of the applicator insertion section 10, or the lower part of the pouch housing section 12, but in consideration of the confirmation of the flowing-out state of the dental liquid and the ease of shaping of the package 2, it is preferred that the range be both of the lower part of the applicator insertion section 10 and the lower part of the pouch housing section 12.

A pouch 14 is housed in the pouch housing section 12 of the package 2. Such a pouch 14, which is called a pillow or a pillow package as illustrated in Fig. 2, may itself be in a well-known form. It may be formed by shaping a belt-shaped film into a tubular form, joining both end edge portions 16 of the tubular form by heat fusion, and joining a bottom edge portion (one end edge portion) 18 and a top edge portion (other end edge portion) 20 of the tubular form by heat fusion. In Fig. 2, both end edge portions 16 of the belt-shaped film joined together are marked with crossed diagonal lines, and the joined bottom edge portion 18 and the joined top edge portion 20 of the tubular form are similarly marked with crossed diagonal lines. Within the pouch 14, a dental liquid 21 is accommodated.

The belt-shaped film for forming the pouch 14 may be a publicly known film of polyethylene, nylon, polyethylene terephthalate, polypropylene, or aluminum, or a laminated film formed by laminating them. Of them, a preferred one includes a film having gas barrier properties such as a film of an ethylene-vinyl alcohol copolymer, polyvinylidene chloride, silica or aluminum, because many dental liquidsgenerallycontain volatile components at least as some components. Generally, a dental liquid often contains a polymerizable monomer and/or a photopolymerization initiator, so that the use of a light shielding film is particularly preferred. Thus, it is particularly preferred for the pouch 14 to comprise a resin film having aluminum vapor deposited thereon (aluminum-deposited film) which has both of gas barrier properties and light shielding properties and further has satisfactory formability. The thickness of the belt-shaped film can be selected, as appropriate, depending on the material for the film, but in view of the formability of the film, the preferred thickness is of the order of 25 to 200 µm. The hardness (tensile modulus) of the film is not particularly limited, but 1 MPa to 10 GPa, particularly 1 to 5 GPa, is preferred.

When a pressing force is exerted on the pouch 14, the joint of the bottom edge portion 18 is released, and the dental liquid 21 accommodated in the pouch 14 is discharged through the bottom edge (one end edge) of the pouch 14. For this purpose, the joint strength of the bottom edge portion 18 is advantageously decreased in comparison with the joint strength of the top edge portion 20, for example, by changing the pressure welding strength and temperature during sealing, or changing the seal width or the seal shape. Concretely, when the seal strength is evaluated in compliance with JISZ0238, the seal strength is preferably in the range of 15 to 70 N/15 mm at the top edge portion 20, and is preferably in the range of 1 to 15 N/15 mm at the bottom edge portion 18. With the structure of the synthetic resin package of the present invention, the joined product of both end edge portions 16 of the film is scarcely pressurized and difficultly breakable, and may thus have such joint strength that its joining is not released. If desired, the pouch 14 can be formed, with the joint strengths of the bottom edge portion 18 and the top edge portion 20 of the pouch 14 being rendered substantially the same. Then, as will be further detailed later, the top edge portion 20 of the pouch 14 is positioned between the top edge portions of the package 2, and the top edge portions of the package 2 are heat bonded, whereby the joint strength of the top edge portion 20 can be increased.

The viscosity of the dental liquid accommodated in the pouch 14 is not particularly limited. However, the synthetic resin package of the present invention can be used preferably when a dental liquid having a low viscosity is used. Concretely, the synthetic resin package of the present invention can be used preferably, when a dental liquid having a viscosity at 25°C of 0.0001 to 0.1 Pa ·s, particularly 0.0001 to 0.001 Pa ·s, is used.

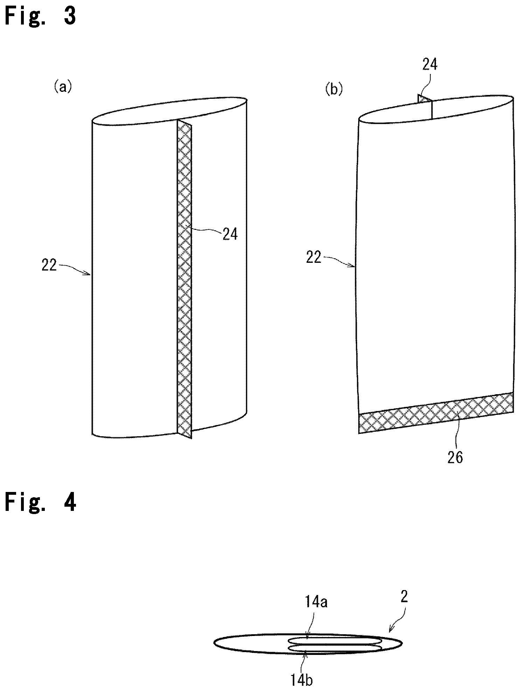

Apreferred example of the mode of production of the package 2 shown in Fig. 1 will be described by reference to Fig. 3a and Fig. 3b. First, as shown in Fig. 3a, a belt-shaped synthetic resin film or sheet 22 is shaped into a tubular form, and both-end edge portions 24 are joined together over their entire lengths, preferably, by heat fusion (In Fig. 3a, the tubular form is illustrated, as viewed from the back side, contrary to the views in Fig. 1 and Fig. 3b, in order to clearly illustrate the combined both-end edge portions 24). The heat fusion can be performed advantageously by pressing a pair of heating blocks (not shown) against both side surfaces of the film or sheet superposed on each other. In order to render the joint strength by the heat fusion sufficiently intense, it is possible, for example, to make the opposing surfaces of the pair of heating blocks surfaces having protrusions and depressions repeated, thereby bringing the site of heat fusion into a shape in which the protrusions and depressions are repeated. Then, as shown in Fig. 3b, a bottom edge portion 26 of the tubular form is joined over its entire length. This joining can also be performed advantageously by heat fusion. Then, as shown in Fig. 1, of the top edge portion of the tubular form, the remainder 28b, with the exception of the part 28a, is joined at least partly, preferably throughout its length, to complete the package 2. The joining of the remainder 28b of the top edge portion is also performed advantageously by heat fusion. In Figs. 1, 3a and 3b, the sites of joining in the package 2 are marked with crossed diagonal lines. Prior to joining of the remainder 28b of the top edge portion, the pouch 14 is admitted into the pouch housing section 12 of the package 2 through the remainder 28b of the top edge portion, with the bottom edge (one end edge) of the pouch 14 facing downward. On this occasion, at least a part of the top edge portion (other end edge portion) 20 of the pouch 14 is preferably positioned between the remainders 28b of the top edge portion of the tubular form. In this state, the remainders 28b of the top edge portion of the tubular form are joined together, whereby the top edge portion 20 of the pouch 14 is confined between the remainders 28b of the top edge portion of the package 2, and the pouch 14 is restricted to a predetermined position within the pouch housing section 12. Preferably, the bottom edge of the pouch 14 restricted to the predetermined position is located upwardly away from the bottom edge of the pouch housing section 12, and a predetermined spacing is present between the bottom edge of the pouch housing section 12 and the bottom edge of the pouch 14. If desired, prior to shaping the belt-shaped synthetic resin film or sheet 22 into the tubular form and joining both end edge portions 24 thereof together, at least a part of the top edge portion 20 of the pouch 14 is joined to a required site of the belt-shaped synthetic resin film or sheet (the site defining one wall surface of the remainder 28b of the top edge portion), and then treatments as stated earlier are applied to the belt-shaped synthetic resin film or sheet, whereby the package 2 can be completed.

The number of the pouches 14 to be housed in the pouch housing section 12 can be changed in accordance with the purpose of use of the dental liquid. The number of the pouches 14 to be housed may be one or two or more. In consideration of the ease of production of the synthetic resin package, the purpose of use of the dental liquid, and so on, the number of the pouches 14 is preferably of the order of 1 to 4. If the dental liquid to be used is a two-pack adhesive liquid, for example, a first pouch 14a accommodating a first adhesive liquid and a second pouch 14b accommodating a second adhesive liquid can be superposed, and introduced into the pouch housing section 12 of the package 2, as shown in Fig.4. In this case, the first adhesive discharged from the first pouch 14a and the second adhesive discharged from the second pouch 14b can be effectively mixed within the package 2.

The synthetic resin film or sheet for use in the production of the package 2 is not particularly limited, and a publicly known synthetic resin film or sheet can be adopted, but one having satisfactory transparency is preferred. If desired, at least one of a lower part of the applicator insertion section 10 and a lower part of the pouch housing section 12 can be rendered transparent or translucent by post-processing.

For example, the following can be used preferably:
Olefin polymers, such as polyethylene, polypropylene, polybutylene, and copolymers obtained by copolymerizing two or more olefin monomers selected from ethylene, propylene and butene;
(Meth)acrylic monomers, such as poly(meth)acrylic acid typified by polymethyl methacrylate, and copolymers obtained by copolymerizing two or more (meth)acrylic monomers;
Styrene polymers, such as polystyrene, poly(acrylonitrile-styrene),poly(butadiene-styrene), and ABS polymer;
Flexible vinyl polymers, such as polyvinyl acetate, polyvinyl chloride, polyvinylidene chloride, chlorinated polyvinyl chloride, and copolymers obtained by copolymerizing two or more vinyl chloride monomers or vinyl acetate monomers;
Amide polymers, such as nylon 6, nylon 66, nylon 610, nylon 612, nylon 11, nylon 12, and nylon 46;
Unsaturated polyester resins, such as polyethylene terephthalate;
Thermoplastic elastomers produced by ester exchange or a polycondensation reaction using dimethyl terephthalic acid, 1,4-butanediol, and poly(oxytetramethylene) glycol as starting materials;
Fluoropolymers, such as polytetrafluoroethylene, polytrifluoroethylene, polyvinylidenefluoride, and copolymers obtained by copolymerizing at least two fluoromonomers selected from tetrafluoroethylene, trifluoroethylene, and vinyl fluoride; and
Other polymers including polycarbonate, polyacetal, polyether sulfone, polyphenylene oxide, polyphenylene sulfide, and polysufone.

Of them, the olefin polymers, such as polyethylene, polypropylene, polybutylene, and copolymers obtained by copolymerizingtwoor moreolefin monomersselectedfrom ethylene, propylene and butene, are particularly preferred, because their properties such as biological safety, transparency of raw materials, and flexibility are optimal for the uses of the present invention.

The thickness of the film or sheet constituting the package 2 is not particularly limited, but is preferably of the order of 20 to 500 µm, particularly 20 to 200 µm. The tensile modulus of the film or sheet is preferably 0.5 to 10 GPa, particularly 1 to 6 GPa, in consideration of the formability and the retention properties of the pouch 14.

Instead of forming the package 2 from the synthetic resin film or sheet, it is possible, if desired, to produce the package 2 by injection molding, extruding, or blow molding the polymer exemplifiedas the synthetic resin filmor sheet. Alternatively, the package 2 can be produced by any of these shaping methods in combination with heat sealing. If such a shaping method is employed, it is preferred, needless to say, that the thickness and the modulus of elasticity of the resin layer constituting the package 2 be the same as those in the ranges illustrated for the synthetic resin film or sheet.

Next, the mode of use of the above-described preferred embodiment of the package 2 configured in accordance with the present invention will be described by reference to Fig. 5. First of all, the package 2 is held, for example, in an upright state by one hand, and the pouch housing section 12 of the package 2 is pinched between the two fingers of the other hand to press the package 2, thereby exerting a pressing force on the pouch 14 via the package 2. By so doing, the joint of the bottom edge portion 18 of the pouch 14 is released, and the bottom edge of the pouch 14 is unsealed. The dental liquid accommodated in the pouch 14 is discharged into a lower part of the package 2 through the bottom edge of the pouch 14, and flowed into a lower part of the applicator insertion section 10 of the package 2. If two pouches (a first pouch and a second pouch) are housed within the pouch housing section 12 of the package 2, the dental liquids 21 discharged from the two pouches are effectively mixed and flowed into the lower part of the applicator insertion section 10 from the lower part of the pouch housing section 12 of the package 2. If desired, as indicated by a dashed double-dotted line 29a in Figs. 1 and 5, the part in the mutually joined region of the bottom edge portion 26 of the package 2, which corresponds to the pouch housing section 12, is inclined gradually upwardly in a direction away from the applicator insertion section 10, whereby the flow of the dental liquid from the lower part of the pouch housing section 12 into the lower part of the applicator insertion section 10 can be promoted. If the amount of the liquid accommodated in the pouch 14 is relatively large, or many of the pouches 14 are present within the package 2 and the total amount of the liquids discharged from these pouches 14 is relatively large, on the other hand, the part in the mutually joined region of the bottom edge portion 26 of the package 2, which corresponds to the applicator insertion section 10, is inclined gradually upwardly in a direction away from the pouch housing section 12, as indicated by a dashed double-dotted line 29b in Figs. 1 and 5,whereby the accidental discharge of the liquid from the open top edge of the applicator insertion section 10 can be avoided to the maximum extent possible.

Then, the applicator 30 is grasped by the other hand, and its leading end part is inserted into the applicator insertion section 10 through the unsealed top edge. By reference to Fig. 6 illustrating a typical example of the applicator 30, in addition to Fig. 5, the applicator 30 well known per se has a slender rod-shaped body 32, and the liquid holding portion 34 disposed at the leading end of the body 32. The liquid holding portion 34 can be formed from many hairy pieces. When the liquid holding portion 34 of the applicator 30 is advanced to a lower end part of the applicator insertion section 10, the dental liquid present there is incorporated in the liquid holding portion 34 of the applicator 30. The applicator 30 is then pulled out of the applicator insertion section 10, and its liquid holding portion 34 is applied to an affected area (lesion) of a patient, whereby the lesion can be treated with the dental liquid. In allowing the applicator 30 to stand while being inserted into the applicator insertion section 10 during usage, the bottom edge portion 26 is fixed by a common card holder, clip or the like, whereby the applicator 30 can be kept erected and left to stand.

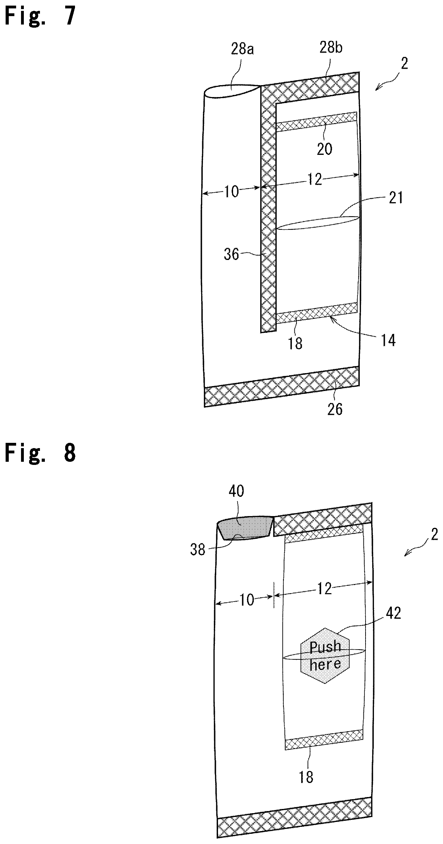

Fig. 7 shows a modified embodiment of the package 2 configured in accordance with the present invention. In the embodiment shown in Fig. 7, the opposing wall surfaces of the package 2 are joined together by heat fusion along the boundary between the applicator insertion section 10 and the pouch housing section 12 of the package 2 (in Fig. 7, a site 36 of heat fusion is marked with crossed diagonal lines), and the cross-sectional area of the pouch housing section 12 is limited to a size approximating the cross-sectional area of the pouch 14. Thus, the pouch 14 is confined to a required position of the pouch housing section 12, and the bottom edge of the pouch 14 is spaced upwardly from the bottom edge of the pouch housing section 12. The top edge of the pouch 14 is located somewhat below the joined top edge portion 28b of the package 2. It is important that the above joining along the boundary between the applicator insertion section 10 and the pouch housing section 12 of the package 2 is not performed in lower parts of the applicator insertion section 10 and the pouch housing section 12, and that the lower end part of the applicator insertion section 10 and a lower end part of the pouch housing section 12 are in communication.

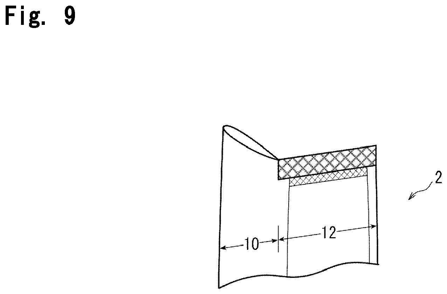

Fig. 8 shows another modified embodiment of the package 2 configured in accordance with the present invention. In the embodiment shown in Fig. 8, a notch 38 extending downward from the top edge of one side wall (front side wall in Fig. 8) is formed in a top edge portion of the applicator insertion section 10 of the package 2. A site 40 in the other side wall (rear side wall in Fig. 8), which corresponds to the notch 38, is colored in a suitable color such as black. This enables a user to easily recognize an applicator insertion port in the top edge portion of the applicator insertion section 10. If desired, it is possible not to form the notch 38, but to color a required site of the one side wall and/or the other side wall in the top edge portion of the applicator insertion section 10 of the package 2. In the embodiment shown in Fig. 8, the top edge of the site 40 is at the same height as that of the top edge of the closed site 8b (Fig. 1) at the top edge of the package 2, but the top edge of the site 40 can be located at a higher position than the top edge of the site 8b. In the embodiment shown in Fig. 8, moreover, the bottom edge of the notch 38 is located below the above site 8b. However, the bottom edge of the notch 38 can be set to be at substantially the same height as the top edge of the site 8b to position the site 40 above the top edge of the site 8b. Furthermore, as shown in Fig. 9, the top edge of the applicator insertion section 10 in the package 2 can be inclined gradually upwardly in a direction away from the pouch housing section 12. Such an inclination can be formed only in a part of the top edge of the applicator insertion section 10, instead of throughout this top edge as illustrated. The embodiment illustrated in Fig. 9 is not markedly difficult to produce itself, but makes it sufficiently easy to recognize the insertion port for the applicator 30. If desired, in the embodiment shown in Fig. 9, as in the embodiment shown in Fig. 8, a notch extending downward from the top edge of one side wall (front side wall in Fig. 9) can be formed in the top edge portion of the applicator insertion section 10 of the package 2.

In the embodiment shown in Fig. 8, an indication 42 showing a site to be pressed is provided at a predetermined site of pressing on one side wall (front side wall in Fig. 8) of the pouch housing section 12, namely, the site to be pressed when the liquid accommodated in the pouch 14 is to be discharged. The illustrated indication 42 is composed of a regular hexagonal shape colored in a suitable color such as gray, and letters "Push here" provided within the hexagonal shape. Instead of, or in addition to, the indication 42 on the one side wall of the pouch housing section 12, such an indication 42 can be provided on the other side wall (back side wall in Fig. 8).

The some embodiments configured in accordance with the present invention have been described in detail by reference to the drawings. However, there is no need to dwell on the fact that the present invention is in no way limited to these embodiments, but various changes or modifications can be made without departing from the scope of the present invention. For example, the packages 2 of the illustrated embodiments are thin bags overall, but the thickness of the lower end part, in particular, of each package can be rendered relatively large to impart a self-supporting form to the package.

### Explanations of Letters or Numerals

- 2:: Package
- 4a:: Side edge of package
- 4b:: Side edge of package
- 6:: Bottom edge of package
- 8:: Top edge of package
- 8a:: Open site in top edge of package
- 8b:: Closed site in top edge of package
- 10:: Applicator insertion section
- 12:: Pouch housing section
- 14:: Pouch
- 21:: Dental liquid
- 30:: Applicator
- 38:: Notch
- 40:: Colored site
- 42:: Indication

## Claims

1. A synthetic resin package containing at least one pouch which accommodates a dental liquid and which, when pressed, is unsealed at one end edge and allows the dental liquid to be flowed out through the unsealed one end edge, wherein
both side edges and a bottom edge of the package are closed throughout, an applicator insertion section and a pouch housing section situated adjacently in a lateral direction are defined in the package and, in a top edge of the package, a site corresponding to the pouch housing section is closed at least partially, while a site corresponding to the applicator insertion section is open,
the pouch is positioned within the pouch housing section, with the one end edge facing downward, and when the pouch is pressed via the package, the one end edge of the pouch is unsealed, whereby the dental liquid is flowed out from inside the pouch through the one end edge to a lower part of the pouch housing section, and then flowed to a lower part of the applicator insertion section, and
when an applicator is inserted into the applicator insertion section through the top edge which has been opened, the dental liquid can be stuck to a leading end part of the applicator.

2. The synthetic resin package according to claim 1, wherein
the pouch is introduced into the pouch housing section, with at least a part of another end edge portion of the pouch being interposed between predetermined sites of top edge portions of the package,
the top edge portions are partly joined together, whereby the site of the top edge corresponding to the pouch housing section is closed, and the other end edge portion of the pouch is confined between the top edge portions of the package, while the one end edge of the pouch is located upwardly away from a bottom edge of the pouch housing section.

3. The synthetic resin package according to claim 1, wherein
opposing wall surfaces of the package are joined together along a boundary between the pouch housing section and the applicator insertion section, but except for a lower end part of the package, whereby the pouch is restricted to a required position within the pouch housing section, and the one end edge of the pouch is located upwardly away from a bottom edge of the pouch housing section.

4. The synthetic resin package according to any one of claims 1 to 3,
which is formed by shaping a belt-shaped synthetic resin film or sheet into a tubular form, joining both end edge portions of the tubular form over entire lengths thereof, joining bottom edge portions of the tubular form over entire lengths thereof, and joining top edge portions of the tubular form partially,
wherein before the top edge portions are partially joined, the pouch is introduced into the pouch housing section.

5. The synthetic resin package according to any one of claims 1 to 4, wherein
at least one of the lower part of the pouch housing section and the lower part of the applicator insertion section is transparent or translucent.

6. The synthetic resin package according to any one of claims 1 to 5, wherein
in a top edge portion of the applicator insertion section, a notch extending downward from the top edge is formed in one wall surface of the applicator insertion section.

7. The synthetic resin package according to any one of claims 1 to 6, wherein
in a top edge portion of the applicator insertion section, another wall surface of the applicator insertion section is colored in a color different from a color of one wall surface of the applicator insertion section.

8. The synthetic resin package according to any one of claims 1 to 5, wherein
at least a part of a top edge of the applicator insertion section is inclined gradually upwardly in a direction away from the pouch housing section.

9. The synthetic resin package according to any one of claims 1 to 8, wherein
the bottom edge is closed by joining bottom edge portions of both wall surfaces of the package mutually, and
a part in a mutually joined region of the bottom edge portions, which corresponds to the pouch housing section, is inclined gradually upwardly in a direction away from the applicator insertion section.

10. The synthetic resin package according to any one of claims 1 to 8, wherein
the bottom edge is closed by joining bottom edge portions of both wall surfaces of the package mutually, and
a part in a mutually joined region of the bottom edge portions, which corresponds to the applicator insertion section, is inclined gradually upwardly in a direction away from the pouch housing section.

11. The synthetic resin package according to any one of claims 1 to 10, wherein
an indication is provided at a predetermined site of pressing on at least one wall surface of the pouch housing section.

12. The synthetic resin package according to any one of claims 1 to 11, wherein
at least two of the pouches are located within the pouch housing section, and
liquids flowed out of the at least two pouches are mixed.
